Europäisches Patentamt

European Patent Office

Office européen des brevets

(19)

(11) Veröffentlichungsnummer : **0 359 978 B1**

## (12) EUROPÄISCHE PATENTSCHRIFT

(45) Veröffentlichungstag der Patentschrift :
**26.02.92 Patentblatt 92/09**

(51) Int. Cl.⁵ : **G01G 21/24,** G01G 7/02

(21) Anmeldenummer : **89114785.2**

(22) Anmeldetag : **09.08.89**

(54) **Elektronische Waage.**

(30) Priorität : **01.09.88 DE 3829637**

(43) Veröffentlichungstag der Anmeldung :
**28.03.90 Patentblatt 90/13**

(45) Bekanntmachung des Hinweises auf die
Patenterteilung :
**26.02.92 Patentblatt 92/09**

(84) Benannte Vertragsstaaten :
**CH ES FR GB IT LI**

(56) Entgegenhaltungen :
**EP-A- 0 055 633**
**EP-A- 0 195 875**
**EP-A- 0 291 258**
**DE-U- 8 516 448**
**US-A- 3 080 936**

(73) Patentinhaber : **SARTORIUS AG**
**Weender Landstrasse 94-108**
**W-3400 Göttingen (DE)**

(72) Erfinder : **Kuhlmann, Otto**
**Iltisweg 5**
**W-3400 Göttingen (DE)**
Erfinder : **Södler, Walter**
**Annastrasse 66**
**W-3400 Göttingen (DE)**
Erfinder : **Stadler, Eberhard**
**Gehrenring 26**
**W-3400 Göttingen (DE)**

(74) Vertreter : **Köhler, Rudolf**
**c/o Sartorius AG Weender Landstrasse 94-108**
**W-3400 Göttingen (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine elektronische Waage gemäß dem Oberbegriff des Anspruches 1. Elektronische Waagen dieser Art sind allgemein bekannt z.B. durch die DE-OS 36 39 521, bei der die Biegefeder als Kreuzbandgelenk ausgebildet ist. In der DE-Ul-85 16 448 ist das Kreuzbandgelenk einer solchen Waage beschrieben, bei dem ein geringes rücktreibendes Moment angestrebt ist. Aus der EP-291 258-A2 ist eine Waage mit Biegefeder am Übersetzungshebel bekannt, die Bestandteil einer gefrästen Parallelführung sind.

Aus der DE-PS 1 238 229 ist es weiterhin bekannt, bei einer mechanischen Waage mit Parallelführung und Hebel eine Feder mit horizontaler Wirkungslinie am Waagschalenträger angreifen zu lassen. Die Übertragung dieser Anordnung auf eine elektronische Waage ist insofern nachteilig, als die horizontale Feder deutlich länger als die Lenker der Parallelführung sein muß, um eine gute Wirksamkeit zu ergeben. Dies würde jedoch die Baugröße der Waage deutlich vergrößern.

Aufgabe der Erfindung ist es daher, für eine elektronische Waage der eingangs genannten Art eine platzsparende und besonders wirksame Astasierungsmöglichkeit zu schaffen.

Erfindungsgemäß wird dies durch den kennzeichnenden Teil des Anspruches 1 erreicht.

Greift die Astasierungsfeder gemäß dem Stand der Technik am parallelgeführten Waagschalenträger an, so beschreibt der Angriffspunkt der Feder einen Kreis mit dem Radius der Lenkerlänge - üblicherweise ca. 50...100 mm. Greift die Astasierungsfeder jedoch erfindungsgemäß am Übersetzungshebel an, so kann der Angriffspunkt der Feder z.B. auf 5 mm an den Hebeldrehpunkt herangebracht werden, wodurch sowohl die Wirksamkeit der Astasierungsfeder wesentlich erhöht wird, als auch die notwendige Baulänge der Feder in gleichem Maße verkürzt wird. Außerdem kann die Wirkungsrichtung der Astasierungsfeder je nach Platzerfordernissen in beliebiger Richtung liegen. Dadurch kann sowohl eine Bauart gewählt werden, in der die Astasierungsfeder waagerecht verläuft - wie in der zitierten DE-PS 1 238 229 -, als auch eine Bauart, in der die Astasierungsfeder senkrecht verläuft. Die letztere Bauform hat den Vorteil, daß sie auch dann einsetzbar ist, wenn die Lagerung des Übersetzungshebels am Systemträger nur aus einer oder mehreren senkrecht stehenden Blattfedern besteht.

Die Astasierungsfeder besteht in einer vorteilhaften Ausgestaltung aus einem Draht oder Band. Dies erfordert nur einen geringen Platzaufwand für die Feder. Dabei wird die Erkenntnis ausgenutzt, daß der große mögliche Federweg einer üblichen Schraubenfeder für eine Astasierungsfeder gar nicht nötig ist, daß also auch eine Federbauform benutzt werden kann, die ihre volle Zugkraft schon bei einer geringen Längenänderung erreicht.

In einer anderen vorteilhaften Ausgestaltung besteht die Astasierungsfeder aus einem seitlich auskragenden elastischen Vorsprung am Übersetzungshebel und dieser seitlich auskragende elastische Vorsprung ist über einen Draht oder ein Band mit dem Systemträger verbunden. Auch dies ergibt eine sehr kompakte Bauweise.

Selbstverständlich können diese beiden Ausgestaltungen auch insofern miteinander kombiniert werden, daß sowohl der seitlich auskragende Vorsprung als auch der Draht bzw. das Band so dimensioniert sind, daß sie zur Nachgiebigkeit beitragen und somit als Teil der Astasierungsfeder wirken.

Um Temperaturgradienten zwischen der Astasierungsfeder und dem Systemträger zu vermeiden, wird die Astasierungsfeder vorteilhafterweise wenigstens teilweise in einem Hohlraum untergebracht, dessen Wände mit dem Systemträger verbunden sind.

Die Erfindung wird im folgenden anhand der schematischen Figuren beschrieben. Dabei zeigt:

Fig. 1 das Wägesystem der elektronischen Waage im Schnitt und die zugehörige Elektronik als Blockschaltbild,

Fig. 1a eine Detailvergrößerung aus Fig. 1 gem. Ausschnitt Ia,

Fig. 2 eine Seitenansicht des Systemträgers und der Lagerung des Übersetzungshebels aus Fig. 1,

Fig. 3 eine zweite Ausgestaltung des Wägesystems der elektronischen Waage in Draufsicht,

Fig. 4 eine Seitenansicht des Systemträgers und der Lagerung des Übersetzungshebels aus Fig. 3 und

Fig. 5 eine dritte Ausgestaltung des Wägesystems der elektronischen Waage in Seitenansicht auf den Systemträger und die Lagerung des Übersetzungshebels.

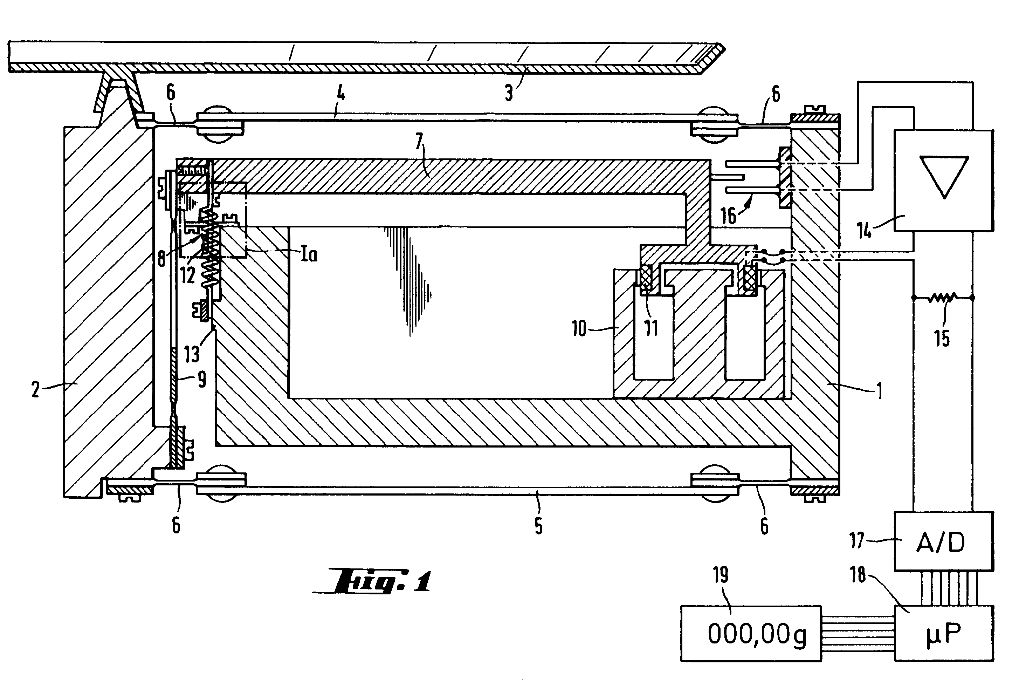

In Fig. 1 ist das Wägesystem der elektronischen Waage im Schnitt dargestellt und die zugehörige Elektronik als Blockschaltbild. Das Gehäuse der elektronischen Waage ist der Übersichtlichkeit halber weggelassen. Das Wägesystem besteht aus einem Systemträger 1, an dem über zwei Lenker 4 und 5 mit den Gelenkstellen 6 ein Lastaufnehmer 2 in senkrechter Richtung beweglich befestigt ist. Der Lastaufnehmer 2 überträgt die der Masse des Wägegutes auf der Waagschale 3 entsprechende Kraft über ein Koppelelement 9 auf den Lastarm des Übersetzungshebels 7. Der Übersetzungshebel 7 ist durch ein Kreuzfedergelenk 8 am Systemträger 1 gelagert. Am Kompensationsarm des Übersetzungshebels 7 ist ein Spulenkörper mit einer Spule 11 befestigt. Die Spule 11 befindet sich im Luftspalt eines Permanentmagnetsystems 10 und erzeugt die Kompensationskraft. Die Größe des Kompensationsstromes durch die Spule 11 wird dabei in bekannter Weise durch einen Lagensensor 16 und einen Regelverstärker 14 so geregelt, daß Gleichgewicht zwischen dem Gewicht des Wägegutes und der elektromagnetisch erzeugten Kompensationskraft herrscht. Der Kompensationsstrom erzeugt an einem Meßwiderstand 15 eine Meßspannung, die einem Analog/Digital-Wandler 17 zugeführt wird. Das digitalisierte Ergebnis wird von einer digitalen Signalverarbeitungseinheit 18 übernommen und in der Anzeige 19 digital angezeigt. - Diese Teile des Wägesystems der elektronischen Waage sind allgemein bekannt und im vorstehenden daher nur ganz kurz beschrieben.

Weiter weist das Wägesystem in Fig. 1 zur Astasierung zwei Federn 12 auf, von denen in Fig. 1 nur eine erkennbar ist. Die Federn 12 sind einerseits am Übersetzungshebel 7 oberhalb des Drehpunktes des Kreuzfedergelenkes 8 befestigt und andererseits an einem Vorsprung 13 des Systemträgers 1 unterhalb des Drehpunktes des Kreuzfedergelenkes 8. Die Wirkungslinie der Federn 12 geht in der Soll-Lage des Übersetzungshebels 7 genau durch den Drehpunkt des Kreuzfedergelenkes 8 (siehe Fig. 1a), so daß in dieser Lage die Federn 12 kein Drehmoment auf den Übersetzungshebel 7 ausüben, das Wägeergebnis also nicht beeinflussen. Nur wenn der Übersetzungssetzungshebel 7 aus seiner Soll-Lage ausgelenkt wird, führt die Zugkraft der Federn 12 zu einem Drehmoment auf den Übersetzungshebel 7, wobei die Wirkrichtung dieses Drehmomentes so ist, daß es die Auslenkung aus der Soll-Lage zu vergrößern sucht. Damit wirkt das Drehmoment der Federn 12 genau entgegengesetzt zum Drehmoment aus den Federn des Kreuzfedergelenkes 8, das den Übersetzungshebel 7 jeweils zurück zur Soll-Lage zu drehen versucht. Bei richtiger Dimensionierung der Kraft der Federn 12 heben sich beide Drehmomente gerade auf und der Übersetzungshebel 7 läßt sich drehmomentfrei bewegen, ist also astasiert. Selbstverständlich gilt dies nur für einen beschränkten Winkelbereich. In gleicher Weise kann durch die Federn 12 nicht nur das rücktreibende Drehmoment des Kreuzfedergelenkes 8 sondern auch das zusätzliche rücktreibende Drehmoment der Parallelführung aus den Lenkern 4 und 5 ganz oder teilweise aufgehoben werden.

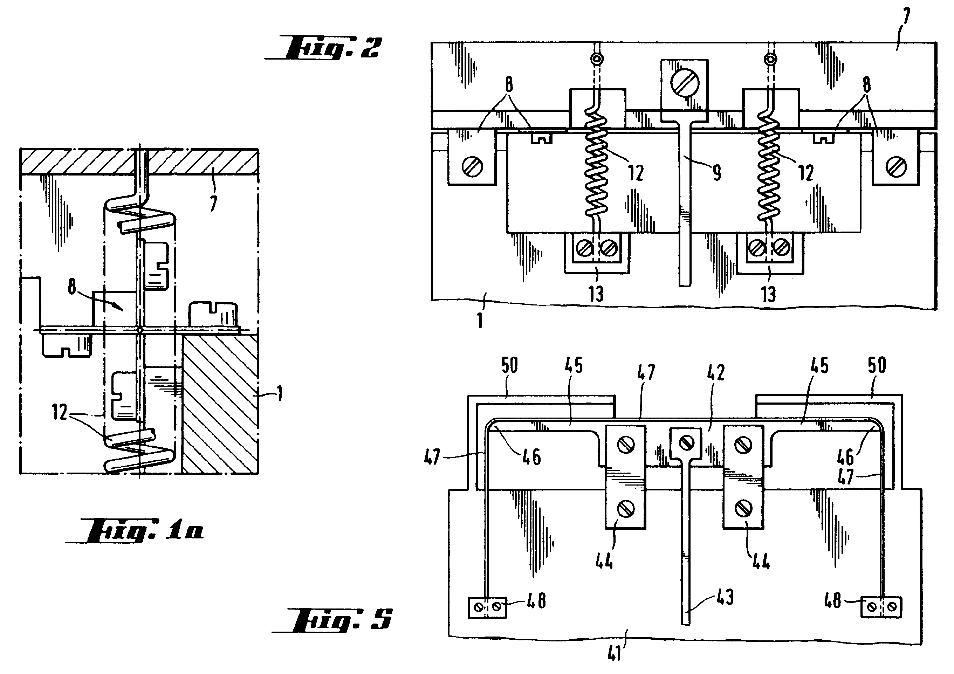

In Fig. 2 ist die Anordnung der beiden Federn 12 nochmal in einer Seitenansicht auf die Stirnfläche des Übersetzungshebels 7 gezeigt. Man erkennt den Übersetzungshebel 7, der über ein Kreuzfedergelenk aus insgesamt 4 Federn 8 (zwei senkrechte und zwei waagerechte) mit dem Systemträger 1 verbunden ist. Das Koppelelement 9 ist nur mit seinem oberen Bereich angedeutet. Die beiden Federn 12 zur Astasierung sind zum einen so am Übersetzungshebel 7 befestigt, daß ihr Kraftangriffspunkt oberhalb des Drehpunktes liegt, der durch das Kreuzfedergelenk 8 gegeben ist, zum anderen sind sie an einem Vorsprung 13 am Systemträger 1 befestigt.

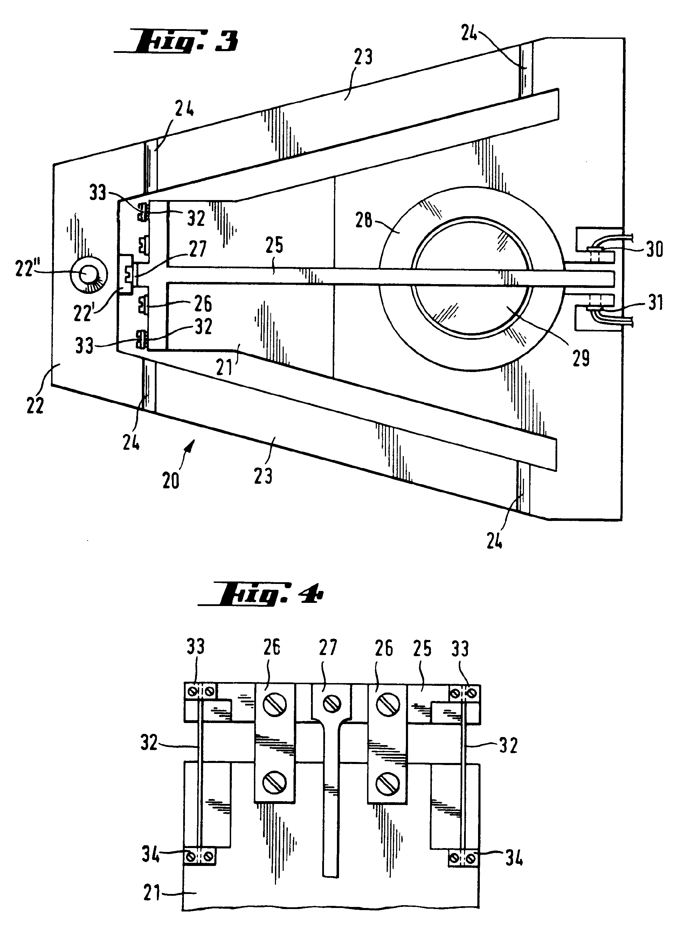

Eine zweite Ausgestaltung des Wägesystems der elektronischen Waage ist in Fig. 3 in Draufsicht gezeigt. Die Parallelführung besteht aus einem einzigen Block 20, der sowohl den Systemträger 21, den Lastaufnehmer 22 als auch die Lenker 23 mit den Dünnstellen 24 umfaßt. Am Systemträger 21 ist ein Magnet 28, ein optischer Lagensensor 30/31 und über zwei Federn 26 der Übersetzungshebel 25 befestigt. Die Kraftübertragung vom Lastaufnehmer 22 mit dem Befestigungskonus 22″ für die (nicht gezeichnete) Waagschale erfolgt über ein Koppelelement 27, das einerseits an einem unteren Vorsprung 22′ des Lastaufnehmers 22 befestigt ist und andererseits am Übersetzungshebel 25. Der Übersetzungshebel 25 trägt an seinem längeren Hebelarm wieder eine Spule 29 für die elektromagnetische Kraftkompensation. - Dieses Wägesystem ist soweit aus der DE-OS 34 22 042 bekannt, so daß hier auf eine detailliertere Beschreibung verzichtet werden kann.

Dieses Wägesystem weist nun zusätzlich zur Astasierung zwei Federn in Form je eines Drahtes 32 auf, wie am besten aus der zugehörigen Seitenansicht in Fig. 4 zu erkennen ist. Die beiden Drähte 32 sind so dünn, daß sie als Federn wirken. Sie sind durch Klemmplättchen 33 am Übersetzungshebel 25 befestigt und durch Klemmplättchen 34 am Systemträger 21. Die Wirkungsweise entspricht der bereits weiter oben erläuterten Wirkungsweise der Federn 12.

Eine dritte Ausgestaltung des Wägesystems der elektronischen Waage zeigt Fig. 5, wobei dort nur die erfindungswesentlichen Teile in Seitenansicht dargestellt sind. Der Übersetzungshebel 42 ist wieder über senkrechte Federn 44 mit dem Systemträger 41 verbunden. Das Koppelelement 43 ist nur in seinem oberen Bereich gezeichnet. Zur Astasierung weist der Übersetzungshebel 42 zwei seitliche Vorsprünge 45 auf, über deren Enden 46 ein Spanndraht 47 geführt ist.

Die Enden des Spanndrahtes 47 sind mit zwei Klemmplatten 48 am Systemträger 41 befestigt. Sowohl die seitlichen Vorsprünge 45 als auch der Spanndraht 47 sind elastisch und wirken damit als Teil der Astasierungsfeder. Je nach Dimensionierung der seitlichen Vorsprünge 45 und je nach Durchmesser des Spanndrahtes 47 können beide Federungsanteile etwa gleich groß sein oder es kann der eine oder der andere Anteil überwiegen.

In Fig. 5 ist ein weiteres Detail angedeutet: Die seitlichen Vorsprünge 45 am Übersetzungshebel 42 und der Spanndraht 47 sind von Metallwänden 50 umgeben, die vom Systemträger 41 hochragen. Durch nicht gezeichnete vordere Abschlußkappen konnen so die Teile 45 und 47 der Astasierungsfeder thermisch an den Systemträger gekoppelt werden, damit möglichst keine Temperaturunterschiede auftreten können. Durch richtige Wahl der Werkstoffe der einzelnen Komponenten kann auch ein statischer Temperaturkoeffizient der Kraft der Astasierungsfeder nahe an Null gebracht werden bzw. nahe an den Temperaturkoeffizienten der Federkonstante des Kreuzfedergelenkes und der Lenkerparallelführung herangebracht werden. Dadurch kann der Einfluß von Temperaturänderungen und der Einfluß von Temperaturgradienten weitgehend ausgeschaltet werden.

Statt des Drahtes kann in den vorstehenden Ausführungsbeispielen selbstverständlich auch ein Band benutzt werden. Genauso kann im Ausführungsbeispiel nach den Figuren 1 und 2 statt der gezeichneten Schraubenfeder ein Band oder ein Draht als Feder benutzt werden. Statt der zwei Federn kann jeweils nur eine, mittig angeordnete Feder benutzt werden. Statt der gezeichneten einfachen Befestigung der Feder(n) durch Madenschrauben bzw. Klemmstücke können auch aufwendigere Befestigungskonstruktionen, die eine Justierung der Zugkraft und der seitlichen Lage erlauben, eingesetzt werden. In den gezeigten Ausführungsbeispielen sind immer stehende Blattfedern als Drehlager für den Übersetzungshebel gezeigt und diese Blattfedern werden durch die Astasierungsfedern auf Druck/Knickung beansprucht. Genauso können natürlich auch hängende Blattfedern als Drehlager für den Übersetzungshebel benutzt werden, die durch die Astasierungsfedern auf Zug beansprucht werden. - Alle diese Varianten kann jeder Fachmann leicht selbst entwerfen, so daß auf eine detaillierte Beschreibung hier verzichtet werden kann.

Weiterhin ist die erfindungsmäßige Ausführung auch auf elektronische Wägesysteme mit mehreren hintereinandergekoppelten Hebeln sinngemäß übertragbar.

## Patentansprüche

1. Elektronische Waage mit einer Waagschale (3), die über eine Parallelführung (4,5,6) mit einem Systemträger (1) verbunden ist, und mit einem Übersetzungshebel (7), der mittels einer Biegefeder (8) drehbar am Systemträger gelagert ist und auf dessen kürzeren Hebelarm über ein Koppelelement (9) die auf die Waagschale wirkende Gewichtskraft übertragen wird und an dessen längerem Hebelarm die Spule (11) einer elektromagneischen Kraftkompensation befestigt ist, _dadurch gekennzeichnet_, daß zur Astasierung mindestens eine Feder (12;32;45,46,47) am Übersetzungshebel (7,25,42) angreift, deren Wirkungslinie durch den Drehpunkt des Übersetzungshebel (7,25,42) geht.

2. Elektronische Waage nach Anspruch 1, _dadurch gekennzeichnet_, daß die Wirkungslinie der Feder(n) (12;32;45, 46,47) senkrecht verläuft.

3. Elektronische Waage nach Anspruch 1 oder 2, _dadurch gekennzeichnet_, daß ein Draht als Feder (32;47) benutzt wird.

4. Elektronische Waage nach einem der Ansprüche 1 oder 2, _dadurch gekennzeichnet_, daß ein Band als Feder (32;47) benutzt wird.

5. Elektronische Waage nach einem der Ansprüche 1 oder 2, _dadurch gekennzeichnet_, daß ein seitlich auskragender elastischer Vorsprung (45) am Übersetzungshebel (42) als Feder benutzt wird und dieser Vorsprung (45) über einen Draht oder ein Band (47) mit dem Systemträger (41) verbunden ist.

6. Elektronische Waage nach einem der Ansprüche 1 bis 5, _dadurch gekennzeichnet_, daß die Feder (12;32;45,46,47) wenigstens teilweise in einem Hohlraum verläuft, dessen Wände (50) mit dem Systemträger (1,21,41) verbunden sind.

## Claims

1. Electronic weighing machine with a weighing pan (3), which is connected by a parallel guidance (4, 5, 6) with a system carrier (1), and with a translation lever (7) which is rotatably mounted on the system carrier by means of a coil spring (8) and to the shorter lever arm of which the weight force acting on the weighing pan is transmitted by a coupling element (9) and at the longer lever arm of which the coil (11) of an electromagnetic force compensation is fastened, characterised thereby that for astatising at least one spring (12; 32; 45, 46, 47), the line of action which passes through the fulcrum of the translation lever (7, 25, 42), engages at the translation lever (7, 25, 42).

2. Electronic weighing machine according to claim 1, characterised thereby that the line of action of the spring(s) (12; 32; 45, 46, 47) extends vertically.

3. Electronic weighing machine according to claim 1 or 2, characterised thereby that a wire is used as spring (32; 47).

4. Electronic weighing machine according to one of claims 1 or 2, characterised thereby that a strip is used as spring (32; 47).

5. Electronic weighing machine according to one of claims 1 or 2, characterised thereby, that a laterally projecting resilient projection (45) at the translation lever (42) is used as spring and this projection (45) is connected by a wire or strip (47) to the system carrier (41).

6. Electronic weighing machine according to one of claims 1 to 5, characterised thereby that the spring (12; 32; 45, 46, 47) extends at least partly in a chamber, the walls (50) of which are connected to the system carrier (1, 21, 41).

**Revendications**

1. Balance électronique comportant un plateau de balance (3) relié à un support de système (1) par l'intermédiaire d'un parallélogramme (4, 5, 6) et un levier de transmission (7), qui est logé de manière à pouvoir pivoter sur le support de système au moyen d'un ressort de flexion (8) et sur le bras le plus court duquel est transmis, par l'intermédiaire d'un élément de couplage (9), le poids agissant sur le plateau de la balance et sur le bras le plus long duquel est fixée la bobine (11) d'un compensateur électromagnétique de force, caractérisé en ce qu'en vue de l'astasie, est en prise sur le levier de transmission (7, 25, 42) au moins un ressort (12 ; 32 ; 45, 46, 47), dont la ligne d'action passe par le point d'appui du levier de transmission (7, 25, 42).

2. Balance électronique selon la revendication 1, caractérisée en ce que la ligne d'action du(des) ressort(s) (12 ; 32 ; 45, 46, 47) est verticale.

3. Balance électronique selon la revendication 1 ou 2, caractérisée en ce que le ressort utilisé (32 ; 47) est un fil métallique.

4. Balance électronique selon l'une des revendications 1 ou 2, caractérisée en ce que le ressort utilisé (32 ; 47) est une bande.

5. Balance électronique selon l'une des revendications 1 ou 2, caractérisée en ce que le ressort utilisé est un prolongement élastique (45) faisant saillie latéralement du levier de transmission (42) et en ce que le prolongement (45) est relié au support de système (41) par l'intermédiaire d'un fil métallique ou d'une bande (47).

6. Balance électronique selon l'une des revendications 1 à 5, caractérisée en ce que le ressort (12; 32; 45, 46, 47} passe, partiellement au moins, dans une cavité, dont les parois (50) sont reliées au support de système (1, 21, 41).

**Fig. 1**

000,00g

A/D

μP

Fig. 2

Fig. 5

Fig. 1a

**Fig. 3**

**Fig. 4**